# EUROPEAN PATENT SPECIFICATION

(11) **EP 1 461 394 B1**
(45) Date of publication and mention of the grant of the patent: **15.08.2007**
(21) Application number: 02806248.7
(22) Date of filing: 23.12.2002
(51) Int. Cl.: C09D 11/02, C09D 11/08

(54) **WATER-BASED OFFSET LITHOGRAPHIC PRINTING INKS CONTAINING POLYMERIZABLE SURFACTANTS**
POLYMERISIERBARE OBERFLÄCHENAKTIVE MITTEL ENTHALTENDE DRUCKFARBEN AUF WASSERBASIS FÜR DIE OFFSET-LITHOGRAPHIE
ENCRE AQUEUSE D'IMPRESSION LITHOGRAPHIQUE OFFSET CONTENANT DES TENSIOACTIFS POLYMERISABLES

(30) Priority: 28.12.2001 US 34493
(43) Date of publication of application: 29.09.2004
(73) Proprietor: SUN CHEMICAL CORPORATION, Parsippany, NJ 07054-1285 (US)
(72) Inventor: KRISHNAN, Ramasamy, Colonia, NJ 07607 (US); CZEBOTAR, Martin, Somerset, NJ 08873 (US); YAMAT, Marilyn, Bergenfield, NJ 07621 (US); BABIJ, Hugo, Waldwick, NJ 07463 (US)
(74) Representative: Vossius & Partner
(86) International application number: PCT/US2002/041596
(87) International publication number: WO 2003/057789

(56) References cited:
- WO-A-95/01399
- US-A- 5 338 351
- US-A- 5 972 088
- US-B1- 6 200 372

## Description

The invention relates to water-based ink compositions for use in offset lithographic printing processes that are formulated such that it is unnecessary to conduct the printing process in a humidity chamber.

In an attempt to eliminate volatile organic compounds ("VOCs") in the pressroom, water-based alternatives to oil-based links are being sought for ink formulations. Water-based printing inks for use in flexographic printing processes are known in the prior art. This type of printing process utilizes printing plates wherein the printing images stand up in relief, *i.e.,* the areas to be printed are raised above the non-printing areas. Printing by the flexographic process requires relatively low pressure. All that is required is application of sufficient pressure to transfer the ink from the face of the image carrier to the surface of the substrate.

Examples of useful water-based flexographic printing inks are disclosed in U.S. Pat. No. 4,173,554 and in The Printing Ink Manual, edited by R. H. Leach and R J. Pierce, pages 571-576, 5th edition, (Blueprint, 1993), the contents of each of which are incorporated herein by reference.

Water-based inks for gravure printing are also well known. In the gravure process, the printing image is engraved into a cylinder in the form of cells that become filled with ink. Printing is achieved by passing the substrate between the gravure cylinder and impression roller under pressure. Examples of useful water-based gravure printing inks are disclosed in U.S. Pat. Nos. 4,954,556 and 5,098,478, the contents of each of which are incorporated herein by reference.

The offset lithographic printing process presents unique challenges to ink formulators, since such process utilizes a planographic printing plate, wherein the image and non-image areas are in the same plane on the image carrier, and two fluids are concurrently utilized.

It is fairly simple to define an image area by raising it above the background, as in the case of the flexographic printing plate, or lowering it, as in the case of the gravure printing plate; in the processes utilizing such plates, avoidance of ink adhering to the non-image area is not too difficult to achieve. However, when all areas are in the same plane, specific techniques must be utilized to insure that ink adheres only to the image area, and not to the non-image area.

In conventional offset lithographic printing processes, the plate is damped before it is inked with an oil-based ink. Typically, the damping process utilizes a fountain solution, such as those described in United States Patent Nos. 3,877,372; 4,278,467; and 4,854,969, the contents of each of which are incorporated herein by reference. Upon damping, water forms a film on the hydrophilic areas (the non-image areas) of the printing plate, but contracts into tiny droplets on the oleophilic areas (the image areas) of the plate. When an inked roller containing the oil-based ink is passed over the damped plate, it will be unable to ink the areas covered by the water film (the non-image areas), but will emulsify the droplets on the water-repellant areas (the image areas), causing such area to ink up. Such process is called "offset lithography," because the inked image on the plate does not directly print onto the paper substrate, but is first "offset" onto a rubber blanket, and transferred therefrom onto the paper substrate.

As mentioned above, conventional offset lithographic printing processes entail the use of oil-based inks and water-based fountain solutions. Establishing and maintaining a correct ink/water balance is critical, and requires a high level of skill. This is one of the several disadvantages associated with such printing processes, as compared to flexographic and gravure printing processes. Moreover, the oil-based inks and aqueous fountain solutions typically employed in conventional offset lithographic printing processes contain fairly high levels of undesirable VOCs.

United States Patent No. 3,356,030 ("the '030 patent") discloses the use of a water-based printing ink for a method of planographic printing utilizing a lithographic printing plate whose non-image areas are coated with a cured coating of a thermosetting silicone resin. However, the method of the '030 patent also entails the use of a volatile hydrocarbon fountain solution which will coat the non-image areas and which is re-applied between successive printings. Unfortunately, the use of a volatile hydrocarbon fountain solution undermines the principal purpose of using the water-based ink compositions, namely, the avoidance or elimination of the emission of VOCs during the printing process. In contrast, the water-based ink compositions of the present invention may be used for offset lithographic printing processes without any fountain solution whatsoever.

In the 1980s, a resurgence of interest occurred in "waterless" lithographic printing processes. Both positive and negative waterless planographic printing plates are commercially available from, for example, Toray Industries of Japan. The image area of a waterless planographic plate is a photopolymer similar to that employed for the image area of a conventional plate. However, the non-image area is coated with an ink-repellant polymer, such as a silicone. Further information about waterless printing plates and processes may be found in United States Patent Nos. 5,370,906 and 5,417,749, the contents of each of which are incorporated herein by reference.

Use of a waterless printing process addressed two concerns associated with prior processes: (i) reduction/elimination of VOCs emanating from the fountain solutions, and (ii) lessening of the skill required to maintain the ink/water balance by the pressman. However, the waterless process has its own drawbacks. The difference in surface energy between the image and non-image areas of the conventional offset lithographic printing plate is typically 40 dynes/cm. This is reduced to 20 dynes/cm in the case of the waterless printing plate. Therefore, the latitude between scumming and poor print density is considerably narrowed. Further, the problem of some VOC emissions still remains, as waterless printing utilizes oil-based ink from which VOCs emanate.

German Offenlegungsschrift DE 41 19 348 A1 pertains to a moistureless offset printing method and a water-based printing ink. The ink described therein is one which will adhere to hydrophilic materials, but not to hydrophobic materials, and contains a dye, water, 5% to 50% of a water-soluble macromolecular binder, and a hygroscopic liquid, preferably a multihydric alcohol.

Currently, all lithographic offset printing is done using inks that contain mineral oil or vegetable oils. These inks are used in conjunction with a fountain solution that typically contains a desensitizer, a salt, and a glycol. In order to prevent the evaporation of water from the printing rollers, it was desirable to conduct the printing processes at a high relative humidity, approximately 75% to 100%. Thus, a printing press would require a humidifier, humidity changers, and some means for evaluating the humidification of the interior space. These requirements adversely affect the cost and efficiency of the printing process. Thus, an ink which retained the advantages of conventional water-based inks, such as low VOCs, water washability, and rapid drying, yet did not require use of a separate humidity chamber in the press, would be particularly desirable.

The water-based ink composition of the present invention is for use in lithographic printing processes which, by virtue of the ink's composition, may be carried out in the absence of a humidity chamber. The water-based lithographic ink composition contains water, a resin-bonded pigment, a nonionic surfactant, a rewetting agent, and a polymerizable surfactant. The nonionic surfactant is present in an amount such that the dynamic surface tension of the total composition is about 20 to about 40 dynes/cm. The polymerizable surfactant is 1-alkyloxy-2-hydroxy-propane sulfonate of a derivative thereof and is present in an amount of about 0.5% by weight to about 2% by weight of the composition. The ink composition may also contain other, conventional ink component, as desired.

The water-based ink composition of the present invention dries rapidly at a rate comparable to prior art oil-based inks, emits minimal or no volatile organic compounds (VOCs), and is water washable. In addition, the ink composition of the present invention can be transferred with conventional multiple roller systems without the need for a separate, enclosed humidity chamber, and remains open when subjected to dynamic stress, resulting in an improved roller stability in comparison with the inks of the prior art.

The water-based lithographic ink composition of the present invention contains water, a resin-bonded pigment, a non-ionic surfactant in an amount sufficient to lower the dynamic surface tension of the total composition to about 20 to about 40 dynes/cm, a rewetting agent, and a polymerizable surfactant which is 1-alkyloxy-2-hydroxy-propane sulfonate of a derivative thereof.

Water is present in the ink-composition of the present invention to act as a carrier of the ink components. It is contemplated that the amount of water in the invention be about 15% to about 40% by weight of the total composition, with a preferred amount in the range of about 22% to about 35% by weight of the composition. The water may be present as an added component or may be contributed by one of the other components of the composition.

The resin-bonded pigment for use in the present invention is a pigment bonded to a resin binder. Suggested binders to which the selected pigment may be bonded include, but are not limited to, water-soluble polyamide resins, rosin resins, rosin salts, tall oil resins, methacrylic resins, styrene-acrylic resins, polystyrenesulfonic acid and its salts, and acrylic or vinyl emulsion polymers prepared from monomers selected from the group consisting of acrylic acid esters, methacrylic acid esters, acrylic acid esters of polyhydric alcohols, methyl methacrylate, styrene, vinyl styrene, and vinyl acetate, and mixtures thereof. Particularly preferred binders are polyamide resins specially developed for use in graphic arts compositions, such as those resins sold under the trademark GAX™, available from FitzChem Corporation, Elmhurst, Illinois, U.S.A., and maleated rosin resins, available from Akzo Nobel Chemicals, Inc., Chicago, III.

Pigments which may be incorporated into the resin-bonded pigment include all those commonly used in the art including any type of dye, pigment, filler, or the like, which can be bonded to the binder and permit the resultant resin-bonded pigment to be dispersed, milled, mixed, blended, or dissolved in any manner in the ink composition. Examples of such pigments include the Color Index Pigments (C.I. Pigments) listed in the table below:

| ***Pigment Generic Name*** | ***Pigment C.A. Index*/*Chemical Name*** |
|---|---|
| C.I. Pigment Yellow 17 | Butanamide, 2,2'-[(3,3'-dichloro[1,1'-bipehnyl] 4,4'-diyl)bis(azo)bis [N-(2-methoxypehnyl)-3-oxo- |
| C.I. Pigment Blue 27 | Ferrate (4-1), hexakis (cyano-C)-ammonium iron (3+)(1:1:1) |
| C.I. Pigment Red 49:2 | 1-Naphthalenesulfonic acid, 2-[(2-hydroxy-1-naphthalenyl)azo]-, calcium salt (2:1) |
| C.I. Pigment Red 81: | Benzoic acid, 2,-[6-ethyl-amino)-3-(ethylimino)-2,7-dimethyl-3H-xanthen-9-yl]-, ethyl ester, w/molybdenum tungsten hydroxide oxide phosphate |
| C.I. Pigment Red 81:3 | Benzoic acid, 2-[6-ethyl-amino)-3-ethylimino)-2,7-dimethyl-3H-xanthen-9-yl]-, ethyl ester, molybdatesilicate |
| C.I. Pigment Red 81:x | Benzoic acid, 2-[6-(ethyl-amino)-3-(ethylimino)-2,7-dimethyl-3H-xanthen-9-yl]-, ethyl ester, molybdatephosphate |
| C.I. Pigment Yellow 83 | Butanamide, 2,2'-[(3,3'-dichloro[1,1'-biphenyl]-4,4'-diyl)bis(azo)bis[N-(4-chloro-2,5-dimethoxy-phenyl)-3-oxo- |
| C.I. Pigment Violet 23 | Diindolo[3,3',2'm] triphenodioxazine, 8,18-dichloro-5,15-diethyl- 5,15-dihydro- |
| C.I. Pigment Red 49:1 | 1-Naphthalenesulfonic naphthalenyl)azo]-, barium salt (2:1) |
| C.I. Pigment Red 57:1 | 2-Naphthalenecarboxylic acid, 3-hydroxy-4-[(4-methyl-2-sulfophenyl)azo]-, calcium salt (1:1) |
| C.I. Pigment Blue 61 | Benzenesulfonic acid, [[4-[ [4-phenylamino)-phenyl]-[4-(phenylimino)-2,5-cyclohexadien-1-ylidene]methyl]-phenyl]amino]- |
| C.I. Pigment Red 48:1 | 2-Naphthalenecarboxylic acid, 4-[(5-chloro-4-methyl-2-sulfophenyl)azo]-3-hydroxy-, barium salt (1:1) |
| C.I. Pigment Red 52:1 | 2-Naphthalenecarboxylic acid, 4-[ (4-chloro-5-methyl-2-sulfophenyl)azo]-3-hydroxy-, calcium salt (1:1) |
| C.I. Pigment Violet I | Ethanaminium, N-[9-(2-Carboxyphenyl)-6-(diethyl-amino)-3H-xanthen-3-ylidene]-N-ethyl-, molyb-Datetungstatephosphate |
| C.I. Pigment White 6 | Titanium oxide (TiO₂) |
| C.I. Pigment Blue 15 | Copper, [29H, 31 H-phthalocyaninato (2-)-N²⁹, N³⁰, N³¹, N³² [-, (Sp-4-1) |
| C.I. Pigent Yellow 12 | Butanamide, 2,2'-[(3,3'-dichloro[1,1'-biphenyl]-4,4'-diyl)bis(azo)]bis[3-oxo-N-phenyl- |
| C.I. Pigment Blue 56 | Benzenesulfonic acid, 2-methyl-4-[[4-[ [4-[ (3-methylphenyl)amino] phenyl]-[4-[ (3-methyl-phenyl)-imino]-2-5-cyclohexadien-1-ylidene]methyl]-phenyl] amino]- |
| C.I. Pigment Orange 5 | 2-Naphthalenol, 1-[(2,4-dinitrophenyl)azo]- |
| C.I. Pigment Black 7 | Carbon black |
| C.I. Pigment Yellow 14 | Butanamide, 2,2'-[(3,3'-dichloro[1,1'-biphenyl]-4,4'-diyl)bis(azo)]bis-[N-(2-methylphenyl 0-3-oxo- |
| C.I. Pigment Red 48:2 | 2-Naphthalenecarboxylic acid, 4-[(5-chloro-4-methyl-2-sulfophenyl)-azo]-3-hydroxy-, calcium salt (1:1) |
| C.I. Pigment Blue 15:3 | Copper, [29H, 31 H-Phthalocyaninato (2-)-N²⁹, N³⁰, N³¹, N³² ]-, (SP-4-1)- |
| C.I. Pigment Yellow 1 | Butanamide, 2-[(4-methyl-2-nitrophenyl)azo]-3-oxo-N-phenyl- |
| C.I. Pigment Yellow 3 | Butanamide, 2-[(4-chloro-2-nitrophenyl) azo]-N-(2-chlorophenyl)-3-oxo- |
| C.I. Pigment Yellow 13 | Butanamide, 2,2'-(3,3'-dichloro[1,1'-biphenyl]-4,4'-diyl)bis(azo)]bis [N-(2,4-dimethylphenyl)-B- oxo- |
| C.I. Pigment Orange 16 | Butanamide, 2,2'-[(3,3'-dimethoxy[1,1'-biphenyl]-4,4'-diyl)bis(azo)]bis [3-oxo-N-phenyl- |
| C.I. Pigment Yellow 55 | Butanamide, 2,2'-[(3,3'- dichloro[1,1'-biphenyl]-4,4'-diyl)bis(azo)]bis [N-(4-methylphenyl)-3-oxo- |
| C.I. Pigment Red 41 | 3H-Pyrazol-3-one,4,4'-[(3,3'-dimethoxy[1,1'-biphenyl]-4,4'-diyl)bis (azo)]bis[2,4-dihydro-5-methyl-2-phenyl- |
| C.I. Pigment Orange 34 | 3H-Pyrazol-3-one,4,4'-[(3,3'-dichloro[1,1'-biphenyl]-4,4'-diyl)bis (azo)]bis[2,4-dihydro-5-methyl-2-(4-methylphenyl) |
| C.I. Pigment Blue 62 | 4,4'-Bis(diethylamino) benzophenone condensed with N-ethyl-1-naphthyl-amine in toluene with phosphorous oxychloride and converted to the copper ferrocyanide salt (PTMA salt in P.Blue 1) |
| C.I. Pigment Red 22 | 2-Naphthalenecarboxamide,3-hydroxy-4-[(2-methyl-5-nitrophenyl)azo]-N-phenyl- |
| C.I. Pigment Red 170 | 2-Naphthalenecarboxamide, 4-[[(4-(aminocarbonyl) phenyl]azo]-N-(2-ethoxy- phenyl)-3-hydroxy- |
| C.I. Pigment Red 88 | Benzo[b]thiophen-3(2H)-one, 4,7-dichloro-2-(4,7-dichloro-3-oxobenzo[b]thien-2(3H)-ylidene)- |
| C.I. Pigment Yellow 151 | A diazotized aniline derivative coupled with an acetoacetyl derivative of 5-aminobenzimidazolone |
| C.I. Pigment Red 184 | A diazotized substituted aniline coupled with a derivative of 3-hydroxy- 2-naphthanilide |
| C.I. Pigment Blue 1:2 | Ethanaminium, N-[4-[[4-(diethylamino)phenyl] [4-(ethylamino)-1-1 naphthalenyl]methylene]-2,5-cyclohexadien-1-ylidene]-N-ethyl-, [orthosilicato(4-)] hexatriacontaoxo-dodecamolybdate(4)-(4: 1) |
| C.I. Pigment Blue 15:1 | Copper,[29H,32H-phthalocyaninato(2-)-N²⁹, N³⁰, N³¹, N³² ]-, (SP-4-1)- or Copper,[chloro-29H, 31H-phthalocyaninato (2-1)-N²⁹, N³⁰, N³¹, N³² ]- |
| C.I. Pigment Red 23 | 2-Naphthalenecarboxamide, 3-hydroxy-4-[(2-methoxy-5-nitrophenyl)azo]-N-(3-nitrophenyl) |
| C.I. Pigment Red 3 | 2-Naphthalenol, 1-[(4-methyl-2-nitro-phenyl)azo]- |
| C.I. Pigment Yellow 126 | A tetrazotized derivative of 3,3-dichlorobenzidene coupled with a derivative of acetoacetanilide |
| C.I. Pigment Red 169 | 3-Ethylamino-p-cresol condensed with phthalic anhydride, esterified with ethanol and a mineral acid, and converted to the copper ferrocyanide complex (chloride salt is C.I. Basic Red 1, PTMA salt is P.Red 81:1) |
| C.I. Pigment Orange 13 | 3H-Pyrazol-3-one, 4,4'-[(3,3'-dichloro [1,1'-biphenyl]-4,4'-diyl)bis(azo)]bis[2,4-dihydro-5-methyl-2-phenyl |
| C.I. Pigment Red 10 | 2-Naphthalenecarboxamide, 4-[(2,5-dichlorophenyl) azo]-3-hydroxy-N-(4- methylphenyl |
| C.I. Pigment Blue l:X | Ethanaminium, N-[4-[[4-(diethylamino)phenyl] [4-(ethylamino)- 1-naphtha-lenyl)methylene]-2,5-cyclohexadien-1-ylidene]-N-ethyl-, molybdate-phosphate |
| C.I. Pigment Yellow 42 | Iron oxide (Fe₂O₃) hydrate |
| C.I. Pigment Red 101 | Iron oxide (Fe₂O₃) |
| C.I. Pigment Brown 6 | Iron oxide (Fe₂O₃), some FeO and Fe₂O₃H₂O |
| C.I. Pigment Brown 7 | Iron oxide (Fe₂O₃) plus varying amounts of clay |
| C.I. Pigment Brown 7:X | Fe₂O₃ x MnO₂ with varying amounts of clay |
| C.I. Pigment Metal 1 | Aluminum |
| C.I. Pigment Black 11 | FeO.Fe₂O₃ |
| C.I. Pigment Metal 2 | Copper, zinc |
| C.I. Pigment Red 112 | 2-Naphthalenecarboxamide, 3-hydroxy-N-(2-methyl-phenyl)-4-[(2,4,5-tri-chlorophenyl)azo]- |

Preferred pigments for use in the present invention include C.I. Pigment Yellows 1, 3, 4, 5, 12, 13, 14, 17, 55, 65, 73, 83, 97 and 98; C.I. Pigment Oranges 13, 16, and 46; C.I. Pigment Reds 2, 3, 4, 10, 12, 48, 48:1, 48:2, 53, 57:2, 81, 104, 146, 170, and 176; C.I. Pigment Greens 2, 7, and 36; C.I. Pigment Blues 1, 15:1, 15:2, 15:3, 15:6, 16, 29, 56, and 61; C.I. Pigment Violets 3, 23, and 37; C.I. Pigment Blacks 6 and 7; and C.I. Pigment Whites 6, 7, 18, and 26.

In general, it is preferred that the ratio of pigment to binder is in the range of about 40 parts pigment by weight to about 60 parts binder by weight to about 60 parts pigment by weight to about 40 parts binder by weight (about 60:40 to about 40:60). It is particularly preferred that the ratio of pigment to binder in the resin-bonded pigment is about 50 parts by weight pigment to about 50 parts by weight binder (about 50:50).

A person of ordinary skill in the art will recognize that the amount of resin-bonded pigment present in the ink composition of the present invention will vary, depending on several factors, including the ratio of pigment to binder, other components to be present in a specific ink composition, and the desired opacity of the end product. However, particularly when the pigment:binder ratio is approximately 50:50, it is contemplated that the resin-bonded pigment is present in an amount of about 1% to about 30% by weight of the composition. It is preferred that the resin-bonded pigment is present in an a amount of about 2% to about 24% by weight of the composition, and more preferred that it is present in an amount of about 10% to about 22% of the composition.

The water-based offset lithographic printing ink of the invention may include a nonionic surfactant. The nonionic surfactant selected may include any used routinely in the art for ink and ink-related applications. Examples of suitable nonionic surfactants include acetylenic glycols, ethoxylated glycols, sorbitan esters, and mixtures thereof. Particularly preferred are ethoxylated acetylenic diols. Such surfactants are available, for example, from Air Products and Chemicals, Inc., Allentown, Pennsylvania, U.S.A., under the mark SURFYNOL®.

The nonionic surfactants are present in the ink composition of the invention in an amount such that the dynamic surface tension of the total composition is about 20 to about 40 dynes/cm. It is contemplated that the selected nonionic surfactant(s) may be present in the ink composition in an amount of about 1% to about 2.5% by weight of the composition. It is preferred that the nonionic surfactant(s) be present in the ink composition in an amount of about 1.5% to about 2.2% by weight of the composition.

A rewetting agent may be present in the ink composition of the present invention. Examples of rewetting agents for use in the present invention include urea, thiourea, hydroxyethylene urea, glycerol, sorbitol, ethylene glycol, and butyl carbitol. Particularly preferred is hydroxyethylene urea. Suitable rewetting agents may be obtained from, for example, Sartomer Company, Inc., Exton, Pennsylvania, U.S.A.

The rewetting agent may be present in an amount such that a long "open" time in the press fountain is provided. Specifically, it is contemplated that the rewetting agent may be present in an amount of about 7% to about 18% by weight of the composition, or, preferably, in an amount of about 10% to about 14% by weight of the composition.

The ink composition of the present invention contains a polymerizable surfactant. The polymerizerable surfactant of the invention is 1-allyloxy-2-hydroxy-propane sulfonate Like sodium 1-allyloxy-2-hydroxy-propane - sulfonate (Cops I) and derivatives thereof. The polymerizable surfactant may be present in the ink composition in an amount of about 0.5% to about 5% by weight of the composition. Preferred is that the polymerizable surfactant is present in the ink composition in an amount of about 0.5% to about 2% by weight of the composition, more preferred is that it is present in an amount of about 1.0% to about 1.5% by weight of the composition.

The composition may also contain a clay. The clay may be a natural clay, or a synthetic clay, such as synthetic layered silicate or hectorite, or mixtures thereof. Suitable synthetic clays may be used in either gel-forming grades or sol-forming grades, although gel-forming grades are preferred. Synthetic clays for use in the present invention, such as laponite (a synthetic layered silicate), are available, for example, from Laporte Industries, Ltd., United Kingdom.

The selected clay(s) is present in the invention in the amount of sufficient to achieve the desired level of control of syneresis and/or desired rheological properties of the ink composition. It is preferred that the selected clay be present in an amount of about 0.6% to about 1.0% by weight of the composition, or about 0.7% to about 0.85% by weight of the composition.

The ink composition may contain an oil or oils. Suitable oils for use in the ink composition of the invention, include, but are not limited to, modified or unmodified oils, linseed oil, olive oil, castor oil, motor oil, mineral oil, spindle oil, soybean oil, other vegetable oils, and mixtures thereof. One of ordinary skill in the art will routinely know to vary the quantity of oil in the ink composition in order to achieve the desired tack for a specific ink composition. However, it is preferred that the oil be present in the ink composition in the amount of about 5% to about 25% by weight of the total composition, more preferred that the oil be present in an amount of about 10% to about 17% by weight of the total composition, and most preferred that the oil be present in an amount of about 12% to about 14% by weight of the total composition.

The composition may also contain a blend of polyamide resins as a binder for the resin-bonded pigment. Suitable polyamide resins include those sold under the GAX™ mark by FitzChemicals Corporation, Elmhurst, Illinois, U.S.A. The amount of polyamide resin blend present in the composition may be about 6% to about 10% by weight of the composition.

The ink composition may further include a tall oil rosin resin-based varnish as an element of the vehicle that carries the resin-bonded pigment. The varnish may be a polyester or phenolic type varnish. The varnish may be present in an amount of about 20% to about 40% by weight, and preferably in an amount of 25% to 35% by weight of the total composition.

The ink composition can optionally contain one or more additives. Such additives include waxes such as Jon Wax 26, Jon Wax 120 (available from S.C. Johnson & Sons, Inc., Racine, Wisconsin, U.S.A.), or Van Wax 35 (available from Vantage, Garfield, New Jersey, U.S.A.), modifiers (for example, defoamers) such as WVT-409, Resolv (available from Vantage), Carbowet 990 (available from Vantage), OT-70 Aerosol (available from McIntyre, Chicago, Illinois, U.S.A.), Foamaster 111 (available from Henkel Corporation, Morristown, New Jersey, U.S.A.), alcohols such as N-propyl alcohol, isopropyl alcohol, propylene glycol, ethylene glycol monobutyl ether, or ethylene glycol; biocides; pH stabilizers; dispersants; thickeners, such as acrysol RM-825 (available from Rohm and Haas, Philadelphia, Pennsylvania, U.S.A.); and the like.

The resultant ink composition made in accordance with the invention exhibits comparable or superior pigment wetting, pigment stability, temperature stability, non-settling for extended periods of time, non-polluting with respect to odor and volatile organics, non-flocculating, long "open" time, rapid drying rate, compatibility with other water-based inks, wet rub resistance, ink press stability in general, printability (clean, sharp transfer without "stringing or misting"), solvent resistant, blocking resistance, opacity, dry-rate, and no offset on the printing press, in comparison to inks of the prior art.

The plates for use with the ink of the present invention should be such that the image areas thereof are hydrophilic in nature, while the non-image areas are hydrophobic in nature. An example of a suitable printing plate is the "waterless" Toray type discussed above. However, the image area of the plate need not contain a photopolymer. The image area of the plate may comprise, e.g., a grained aluminum surface that has no coating thereon, but is hydrophilic in nature. The non-image area of the plate must, of course, be hydrophobic in nature. However, the non-image area may be covered with any type of hydrophobic material, provided that such hydrophobic material adheres to the non-images area of the plate during the printing process.

For best results, offset lithographic printing processes utilizing the inks of the present invention are conducted at a temperature in the range of about 10°C to about 30°C, preferably about 15°C to about 25°C.

A printing press which could efficiently utilize the water-based inks of the invention might have the following features: a) an inking mechanism for applying the ink to the print cylinder; b) a housing surrounding the inking mechanism and the print cylinder so as to define an enclosed space; and c) a cooling mechanism for cooling the atmosphere within the enclosed space. The ink of the present invention may be used in printing processes conducted in the absence of an enclosed humidity chamber.

A printing press having the features such as those set forth above would likely also contain sensors and valving mechanisms to insure that the desired temperature, humidity and pH value of the ink are continuously monitored and adjusted as may be necessary throughout the course of the printing operation.

The water-based inks of the present invention are further illustrated by the following non-limiting examples in which all parts and percentages are by weight, unless otherwise indicated.

### EXAMPLE 1

A water-based lithographic ink was prepared from the components indicated below.

| **COMPONENT** | **AMOUNT (Weight Percent)** |
|---|---|
| Water | 35.7 |
| C.I. pigment yellow 13 bonded with a polyamide resin (50:50) (GAX™ 12-513)¹ | 24 |
| Modified linseed oil | 12 |
| Synthetic layered silicate | 0.8 |
| Hydroxyethylethylene urea (70 wt. % solids) | 16 |
| Sodium 1-allyloxy-2-hydroxy propane sulfonate (Cops I) | 1.6 |
| Polyamide resins blend (0.75:1 weight ratio of GAX™ 12-250 and GAX™ 11-966)² | 8 |
| Ethoxylated acetylenic diol surfactant | 1.9 |
| TOTAL | 100 |

| | |
|---|---|
| ¹ Available from FitzChem Corporation, Elmhurst, Illinois, U.S.A. | |

The printing ink was printed using a Didde press whose printing units, printing plate and printing blankets were not enclosed within a humidity chamber.

The printing plate was obtained from Toray industries; the image area of the aluminum oxide substrate was coated with a photopolymer whose surface was hydrophilic in nature, while the non-image area was coated with a silicone polymer. The press run was carried a temperature in the range of about 15°C to about 20°C, and the press speed was about 500 cm/second. The prints obtained from this press run were clear and sharp.

### EXAMPLE 2

A water-based lithographic ink for four color process sheetfed offset printing was made in accordance with Example 1, above, with the exception that the pigment of the resin-bonded pigment component was a cyan pigment. After printing, the ink exhibited favorable, rapid drying. Further, no blocking tendency was observed, even after the printing of 5,000 sheets.

### EXAMPLE 3

A water-based lithographic ink was prepared and printed in the manner described in Example 1, above, with the exception that the following components were used in the preparation of the ink composition.

| **COMPONENT** | **AMOUNT (Weight Percent)** |
|---|---|
| Water | 26.7 |
| C.I. pigment Red 3 bonded with a polyamide resin (50:50) (GAX™ 12-513)³ | 17 |
| Modified linseed oil | 10.5 |
| Synthetic layered silicate | 1 |
| Hydroxyethylethylene urea (70 wt. % solids) | 13 |
| Sodium 1-allyloxy-2-hydroxy propane sulfonate | 0.7 |
| Tall oil rosin resin varnish | 30 |
| Ethoxylated acetylenic diol surfactant | 1.1 |
| TOTAL | 100 |

| | |
|---|---|
| ² Available from FitzChem Corporation, Elmhurst, Illinois, U.S.A. ³Available from FitzChem Corporation, Elmhurst, Illinois, U.S.A. | |

After printing, the ink was aged for three hours and was subjected to moisture. The ink exhibited an increased water resistance *(i.e.,* exhibited a lesser propensity to "run" on the paper) than inks of the prior art.

It will be appreciated by those skilled in the art that changes could be made to the embodiments described above without departing from the broad inventive concept thereof. It is understood, therefore, that this invention is not limited to the particular embodiments disclosed, but it is intended to cover modifications within the spirit and scope of the present invention as defined by the appended claims.

### EXAMPLE 4

A water based offset printing ink was prepared as described in Example I except benzoguanamine resin was replaced with modified linseed oil. The ink was printed on a Miehle press and printed without toning using a Toray waterless printing plate. However, the prints were permanently water sensitive due to the presence of uncrosslinked hydroxyethylethylene urea.

## Claims

1. A water-based lithographic ink composition, the composition comprising: (a) water; (b) a resin-bonded pigment; (c) a nonionic surfactant in an amount such that the dynamic surface tension of the total composition is about 20 to about 40 dynes/cm; (d) a rewetting agent, and (e) a polymerizable surfactant in the amount of about 0.5% by weight to about 2% by weight of the composition, wherein the polymerizable surfactant is 1-allyloxy-2-hydroxy-propane sulfonate and derivatives thereof.

2. The composition according to claim 1, wherein the resin-bonded pigment comprises about 50 parts by weight pigment and about 50 parts by weight binder, and the resin-bonded pigment is present in the composition in an amount of about 2% to about 24% by weight of the composition.

3. The composition of claim 2, wherein the binder is selected from the group consisting of polyamide resins and rosin resins, and the pigment is selected from the group consisting of C.I. Pigment Yellows 1, 3, 4, 5, 12, 13, 14, 17, 55, 65, 73, 73, 83, 97 and 98; C.I. Pigment Oranges 13, 16, 16, and 46; C.I. Pigment Reds 2, 3, 4, 10, 10, 12, 48, 48:1, 48:2, 53, 57:2, 81, 104, 146, 170, and 176; C.I. Pigment Greens 2, 7, and 36; C.I. Pigment Blues 1, 15:1, 15:2, 15:3, 15:6, 16, 29, 56, and 61; C.I. Pigment Violets 3, 23, and 37; C.I. Pigment Blacks 6 and 7; and C.I. Pigment Whites 6, 7, 18, and 26.

4. The composition according to any one of claims 1 to 3, wherein the non-ionic surfactant is present in an amount of about 1% to about 2.5% by weight of the composition.

5. The composition according to any one of claims 1 to 4, wherein the rewetting agent is hydroxyethylene urea.

6. The composition according to any one of claims 1 to 5, wherein the rewetting agent is present in an amount of about 10% to about 14% by weight of the composition.

## Patentansprüche

1. Lithographische Druckfarbenzusammensetzung auf Wasserbasis, wobei die Zusammensetzung umfasst: (a) Wasser; (b) ein harzgebundenes Pigment; (c) eine nicht-ionische oberflächenaktive Substanz in einer solchen Menge, dass die dynamische Oberflächenspannung der Gesamtzusammensetzung ungefähr 20 bis ungefähr 40 Dyn/cm beträgt; (d) ein Mittel zur Wiederbefeuchtung und (e) eine polymerisierbare, oberflächenaktive Substanz in einer Menge von ungefähr 0,5 Gew. % bis ungefähr 2 Gew. % der Zusammensetzung, wobei es sich bei der polymerisierbaren oberflächenaktiven Substanz um 1-Allyloxy-2-hydroxy-propansulfonat und Derivate davon handelt.

2. Zusammensetzung gemäß Anspruch 1, wobei das harzgebundene Pigment ungefähr 50 Gewichtsteile Pigment und ungefähr 50 Gewichtsteile Bindemittel umfasst und das harzgebundene Pigment in der Zusammensetzung in einer Menge von ungefähr 2 Gew. % bis ungefähr 24 Gew. % der Zusammensetzung vorhanden ist.

3. Zusammensetzung von Anspruch 2, wobei das Bindemittel aus Polyamidharzen und Kolophoniumharzen ausgewählt wird und das Pigment aus C.l. Pigment Gelb 1, 3, 4, 5, 12, 13, 14, 17, 55, 65, 73, 83, 97 und 98; C.I. Pigment Orange 13, 16 und 46; C. Pigment Rot 2, 3, 4, 10, 12, 48, 48:1, 48:2, 53, 57:2, 81, 104, 146, 170 und 176; C.I. Pigment Grün 2, 7 und 36; C.l. Pigment Blau 1, 15:1, 15:2, 15:3, 15:6, 16, 29, 56 und 61; C.I. Pigment Violett 3, 23 und 37; C.I. Pigment Schwarz 6 und 7 und C.I. Pigment Weiß 6, 7, 18 und 26 ausgewählt wird.

4. Zusammensetzung gemäß einem beliebigen der Ansprüche 1 bis 3, wobei die nicht-ionische oberflächenaktive Substanz in einer Menge von ungefähr 1 Gew.% bis ungefähr 2,5 Gew.% der Zusammensetzung vorhanden ist.

5. Zusammensetzung gemäß einem beliebigen der Ansprüche 1 bis 4, wobei es sich bei dem Mittel zur Wiederbefeuchtung um Hydroxyethylen-Harnstoff handelt.

6. Zusammensetzung gemäß einem beliebigen der Ansprüche 1 bis 5, wobei das Mittel zur Wiederbefeuchtung in einer Menge von ungefähr 10 Gew. % bis ungefähr 14 Gew. % der Zusammensetzung vorhanden ist.

## Revendications

1. - Composition d'encre lithographique à base aqueuse, la composition comprenant : (a) de l'eau ; (b) un pigment lié à une résine; (c) un agent tensio-actif non ionique dans une quantité telle que la tension superficielle dynamique de la composition totale est d'environ 20 à environ 40 dynes/cm; (d) un agent de re-mouillage; et (e) un agent tensio-actif polymérisable dans la quantité d'environ 0,5% en poids à environ 2% en poids de la composition, l'agent tensio-actif polymérisable étant le 1-allyloxy-2-hydroxy-propane sulfonate et les dérivés de celui-ci.

2. - Composition selon la revendication 1, dans laquelle le pigment lié à une résine comprend environ 50 parties en poids de pigment et environ 50 parties en poids de liant, et le pigment lié à une résine est présent dans la composition dans une quantité d'environ 2% à environ 24% en poids de la composition.

3. - Composition selon la revendication 2, dans laquelle le liant est choisi dans le groupe constitué par les résines de polyamide et les résines de colophane, et le pigment est choisi dans le groupe constitué par les pigments jaunes CI 1, 3, 4, 5, 12, 13, 14, 17, 55, 65, 73, 83, 97 et 98 ; les pigments oranges CI 13, 16 et 46 ; les pigments rouges CI 2, 3, 4, 10, 12, 48, 48:1, 48:2, 53, 57:2, 81, 104, 146, 170 et 176 ; les pigments verts CI 2, 7 et 36 ; les pigments bleus CI 1, 15:1, 15:2, 15:3, 15:6, 16, 29, 56 et 61 ; les pigments violets CI 3, 23 et 37 ; les pigments noirs CI 6 et 7; et les pigments blancs CI 6, 7, 18 et 26.

4. - Composition selon l'une quelconque des revendications 1 à 3, dans laquelle l'agent tensio-actif non ionique est présent dans une quantité d'environ 1% à environ 2,5% en poids de la composition.

5. - Composition selon l'une quelconque des revendications 1 à 4, dans laquelle l'agent de re-mouillage est l'hydroxyéthylène urée.

6. - Composition selon l'une quelconque des revendications 1 à 5, dans laquelle l'agent de re-mouillage est présent dans une quantité d'environ 10% à environ 14% en poids de la composition.
